# EUROPÄISCHE PATENTSCHRIFT

(11) **EP 2 759 162 B1**
(45) Veröffentlichungstag und Bekanntmachung des Hinweises auf die Patenterteilung: **04.03.2020**
(21) Anmeldenummer: 12726103.0
(22) Anmeldetag: 06.06.2012
(51) Int. Cl.: H04W 24/04, G08C 17/02, H04L 1/22, H04L 29/14

(54) **KOMPLETT REDUNDANTE VERBINDUNG UND HANDOVER BEI ZELLULAREN INDUSTRIELLEN FUNKNETZWERKEN**
COMPLETELY REDUNDANT CONNECTION AND HANDOVER IN CELLULAR INDUSTRIAL RADIO NETWORKS
CONNEXION COMPLÈTEMENT REDONDANTE ET TRANSFERT DANS DES RÉSEAUX RADIO INDUSTRIELS CELLULAIRES

(30) Priorität: 10.06.2011 DE 102011105236
(43) Veröffentlichungstag der Anmeldung: 30.07.2014
(73) Patentinhaber: Hirschmann Automation and Control GmbH, 72654 Neckartenzlingen (DE)
(72) Erfinder: RENTSCHLER, Markus, 72581 Dettingen (DE)
(74) Vertreter: Greif, Thomas
(86) Internationale Anmeldenummer: PCT/EP2012/060633
(87) Internationale Veröffentlichungsnummer: WO 2012/168262

(56) Entgegenhaltungen:
- WO-A1-97/37460
- WO-A1-2010/057655
- US-A- 5 329 521
- US-A- 5 546 397
- US-A- 5 586 170
- SVEN MEIER: "Doppelt gemoppelt hält besser! PRP-Parallel Redundancy Protocol, Redundanzkonzept ohne Umschaltung, (Committee Draft IEC 62439, Kap. 6)", INTERNET CITATION, 25. Januar 2007 (2007-01-25), XP002462282, Gefunden im Internet: URL:http://www.electrosuisse.ch/display.cf m?id=113760 [gefunden am 2007-12-13]

## Beschreibung

Die Erfindung betrifft eine Vorrichtung und ein Verfahren zur sicheren Datenübertragung zwischen einem mobilen Teilnehmer und einem stationären Empfänger.

Die hier in Rede stehende sichere Datenübertragung betrifft einen mobilen Teilnehmer, der Kontakt zu einem stationären Empfänger halten soll, wobei der Bewegungsradius des mobilen Teilnehmers so groß sein kann, dass zur drahtlosen Datenübertragung zwischen dem mobilen Teilnehmer und dem stationären Empfänger nicht nur eine einzige Funkzelle mit einem Zugangspunkt (Access Point) ausreicht. Daher betrifft die Erfindung die Datenübertragung, bei denen der mobile Teilnehmer von einer Funkzelle zur nächsten wechselt, wenn er sich bewegt. Um bei dem Wechsel der Funkzellen die Datenverbindung zwischen dem mobilen Teilnehmer und dem stationären Empfänger aufrechtzuerhalten, ist eine Verbindungsübergabe beziehungsweise ein Handover erforderlich, wobei dies einen Vorgang in einem mobilen Telekommunikationsnetz bezeichnet, bei dem sich das in Bewegung befindliche mobile Endgerät während eines Gespräches oder einer Datenverbindung ohne Unterbrechung dieser Verbindung von einer Funkzelle in eine andere wechselt. Beim "Hard-Handover" wird die bestehende Verbindung zu der aktuellen Funkzelle vollständig getrennt, bevor die Verbindung zu einer anderen neuen Funkzelle hergestellt wird. Dieses Vorgehen wird beispielsweise in GSM-Netzen angewandt. Als "Soft-Handover" wird das Verfahren bezeichnet, bei dem die Verbindung zur neuen Funkzelle aufgebaut wird, bevor die bestehende Verbindung zu der aktuellen Funkzelle getrennt wird. Damit bestehen für eine gewisse Zeit zwei gleichzeitige Verbindungen zwischen dem mobilen Teilnehmer und den beiden unterschiedlichen Funkzellen. Dieses Verfahren wird zum Beispiel bei UMTS eingesetzt und ist auch der prinzipielle Ansatz der hier beschriebenen Erfindung.

Bei diesen beiden bekannten Verfahren des Handovers spielt es jedoch keine wesentliche, insbesondere keine sicherheitskritische Rolle, wenn die Verbindung beim Wechsel von einer Funkzelle in die nächste Funkzelle gar nicht, verzögert oder fehlerhaft aufgebaut wird. Der Teilnehmer bemerkt einen solchen Fehler zum Beispiel dadurch, dass die Sprachverbindung (Telefonat) oder Datenverbindung (zum Beispiel Zugang zum Internet) vollständig abbricht, zeitweise unterbrochen ist oder schwer verständlich (Sprache) oder lückenhaft (Daten) ist. Diese verschiedenen Fehler bei dem Handover von einer Funkzelle zu einer weiteren Funkzelle empfindet der mobile Teilnehmer zwar als unschön, wobei dies jedoch keine sicherheitsrelevanten Auswirkungen hat.

Andererseits gibt es Übertragungsstrecken zwischen einem mobilen Teilnehmer und einem stationären Empfänger, bei denen sich der mobile Teilnehmer von Funkzelle zu Funkzelle bewegt, wobei dabei jedoch die Datenübertragung gesichert sein muss. Das bedeutet, dass sowohl bei der Datenübertragung an sich als auch bei dem Wechsel von einer Funkzelle zu der anderen Funkzelle entweder gar kein Fehler oder nur Fehler unterhalb einer sehr geringen Toleranzschwelle zulässig sind. Dabei betrifft die vorliegende Erfindung nur solche Vorrichtungen und Verfahren zur sicheren Datenübertragung, wobei diese nicht mit den eingangs geschilderten Datenübertragungsverfahren für Sprache und zum Beispiel Internet zu vergleichen sind.

Eine solche sichere Datenübertragung ist beispielsweise in der DE 10 2009 053 868 A1 erwähnt. Dieser Stand der Technik betrifft jedoch nur ein Netzwerk mit Steuergerät und Sensor / Aktor mit zwei redundanten Übertragungsstrecken, wobei das Steuergerät über zwei voneinander getrennte drahtlose Übertragungsstrecken mit dem Sensor oder dem Aktor verbunden ist, wobei die Übertragung von Daten zwischen dem Steuergerät und dem Sensor oder dem Aktor über die beiden Übertragungsstrecken mit unterschiedlichen Übertragungsparametern beziehungsweise unterschiedlichen Übertragungstechniken erfolgt. Hierbei wird nicht erwähnt, dass entweder das Steuergerät oder der Sensor oder der Aktor ein mobiler Teilnehmer ist, so dass bei diesem Stand der Technik das eingangs beschriebene Handover überhaupt nicht angesprochen ist.

Vorrichtungen zur Datenübertragung werden auch in WO 97/37460 A1, US 5 329 521 A und US 5 546 397 A beschrieben.

Der Erfindung liegt daher die Aufgabe zugrunde, eine Vorrichtung und ein Verfahren zur sicheren Datenübertragung zwischen einem mobilen Teilnehmer und einem stationären Empfänger anzugeben, bei dem auch im Falle des Handovers die sichere Datenübertragung gewährleistet ist und gleichzeitig das Handover und / oder die sichere Datenübertragung schnell und unkompliziert erfolgt, ohne dass große Rechenkapazitäten des Gesamtsystemes benötigt werden.

Diese Aufgabe ist durch die Merkmale der beiden unabhängigen Patentansprüche gelöst.

Vorgesehen ist eine Vorrichtung beziehungsweise ein Verfahren zur sicheren Datenübertragung zwischen einem mobilen Teilnehmer, der eine Übertragungsvorrichtung aufweist, und einem stationären Empfänger, wobei der mobile Teilnehmer zwischen mehreren Funkzellen wechseln kann und jede Funkzelle mindestens zwei Übertragungsvorrichtungen aufweist, wobei weiterhin die Übertragungsvorrichtungen der Funkzellen drahtgebunden an jeweils einem Netzwerk angeschlossen sind, wobei der stationäre Empfänger ebenfalls drahtgebunden an dem zumindest einen Netzwerk angeschlossen ist und sowohl die drahtlose Übertragung zwischen dem mobilen Teilnehmer und seiner jeweils zugehörigen Übertragungsvorrichtung als auch die drahtgebundene Datenübertragung zwischen der Übertragungsvorrichtung der Funkzelle und dem zumindest einen zugehörigen Netzwerk redundant erfolgt, wobei weiterhin der stationäre Empfänger redundant mit dem Netzwerk drahtgebunden verbunden ist.

Die drahtgebundene Verbindung hat grundsätzlich den Vorteil, dass hierüber die gewünschte sichere, das heißt fehlerfreie oder nahezu fehlerfreie Datenübertragung ohne Weiteres realisiert werden kann. Dies ist im Stand der Technik nicht nur bekannt, sondern für die sichere Datenübertragung auch anerkannt. Zur nochmaligen Steigerung der sicheren Datenübertragung wird jedoch die drahtgebundene Übertragungsstrecke ebenfalls redundant ausgeführt, so dass immer zumindest eine Übertragungsstrecke zur Verfügung steht, falls eine der beiden Übertragungsstrecken ausfallen sollte.

Die Übertragung jedes Datenpakets erfolgt dabei dupliziert über beide Übertragungsstrecken, so dass gewährleistet ist, dass bei Ausfall einer Strecke immer noch das Paket über die andere Strecke beim Empfänger ankommt. Ein derartiges Verfahren wird bspw. in IEC 62439-3 als "Parallel Redundancy Protocol" beschrieben.

Als weiterer Vorteil der Erfindung ist zusätzlich vorgesehen, dass zwischen dem mobilen Teilnehmer und der Funkzelle mehr als eine und damit redundante drahtlose Datenübertragungsstrecke, insbesondere eine Funkverbindung, realisiert wird. Das bedeutet, dass auch hier die gesicherte Datenübertragung zwischen dem mobilen Teilnehmer und der Übertragungsvorrichtung der jeweiligen Funkzelle gesichert ist. Denn es steht mit hinreichend großer Wahrscheinlichkeit immer eine drahtlose Übertragungsstrecke für die Datenübertragung zur Verfügung, auch wenn eine der redundanten Übertragungsstrecken einmal gestört sein sollte. Dies ist gerade bei der Datenübertragung über Funk besonders wichtig, da hierbei vielfältige Störgrößen (wie zum Beispiel Abschattungen, Reflektionen, Interferenzen, externe Störsignale, Witterungseinflüsse, Umgebungseinflüsse und dergleichen) vorliegen. Hinzu kommt aber noch, dass beim Handover von einer Funkzelle zu der anderen Funkzelle mindestens eine der redundanten Übertragungsstrecken in der einen Funkzelle so lange genutzt werden können, bis das Handover einer der anderen Übertragungsstrecke in die andere Funkzelle erfolgt ist. Da auf der im Handoverprozess befindlichen Übertragungsstrecke Verbindungsunterbrechungen auftreten können, wird die unterbrechungsfreie Datenübertragung während dieser Zeit über die nicht im Handover befindliche redundante Strecke gewährleistet. Erst wenn das Handover einer redundanten Übertragungsstrecke von der einen Funkzelle zu der nächsten Funkzelle fehlerfrei durchgeführt worden ist, kann die Datenübertragung der anderen redundanten Übertragungsstrecke zwischen dem mobilen Teilnehmer und der Übertragungsvorrichtung der bisherigen Funkzelle beendet und für diese ebenfalls der Handover durchgeführt werden. Außerdem ist der Vorteil gegeben, dass dann eine der beiden Übertragungsstrecken der einen Funkzelle und eine der beiden Übertragungsstrecken der anderen Funkzelle zur sicheren Datenübertragung genutzt werden kann.

In Weiterbildung erfolgt bei dem Verfahren zur sicheren Datenübertragung die drahtlose Übertragung über die jeweilige redundante Funkstrecke nach beliebigen Verfahren zur drahtlosen Datenkommunikation, vorzugsweise dem IEEE 802.11-Standard (W-LAN oder WiFi), entweder mit gleichen oder unterschiedlichen Übertragungsparametern je Funkstrecke. Als unterschiedliche Übertragungsparameter kommen zum Beispiel die Frequenzen (insbesondere 2,4 und 5 GHz), die Modulationsarten, die Zusammenstellung der Datenpakete oder dergleichen in Betracht.

In Weiterbildung erfolgt die Datenübertragung immer parallel redundant über beide Übertragungsstrecken (das heißt die redundanten Funkübertragungsstrecken und / oder die redundanten drahtgebundenen Übertragungsstrecken), wobei dann, wenn festgestellt wird, dass auf einer Übertragungsstrecke (drahtgebunden und / oder drahtlos) die Datenübertragung fehlerfrei erfolgt ist, die gleiche oder erneute Datenübertragung auf der anderen Übertragungsstrecke unterbunden werden kann. Das heißt, dass zum Beispiel die Aussendung von Daten von dem zugehörigen Empfänger quittiert wird, so dass der Sender weiß, dass die Datenübertragung sicher und fehlerfrei (beziehungsweise unterhalb einer zu definierenden Toleranzschwelle) erfolgt ist. Damit wird wirkungsvoll die Aussendung weiterer Daten, insbesondere von Duplikaten, vermieden, so dass die Rechenkapazitäten des Gesamtsystemes geschont werden. Dabei ist es von besonderem Vorteil, dass die Unterbindung innerhalb einer Funkzelle und / oder beim Wechseln des mobilen Teilnehmers zwischen zwei Funkzellen erfolgt. Erfolgt die Unterbindung nur innerhalb einer Funkzelle, ist der Vorteil gegeben, dass die dortigen Übertragungs- und Rechenkapazitäten, das heißt die physikalischen und hardwaremäßigen Gegebenheiten, effizienter genutzt werden können durch die Vermeidung des Transports unnötiger Datenduplikate über die redundanten drahtlosen Übertragungsstrecken. Besonders optimal ist die Kombination von beiden vorstehend genannten Möglichkeiten, da damit der Aufwand für die sichere Datenübertragung sowohl bei der Datenübertragung zwischen dem mobilen Teilnehmer drahtlos zu dem Netzwerk und dann von dort aus weiter drahtgebunden zu dem stationären Empfänger gesichert, das heißt fehlerfrei, erfolgen kann. Das Gleiche gilt selbstverständlich auch dann, wenn der mobile Teilnehmer von einer Funkzelle in eine andere Funkzelle wechselt.

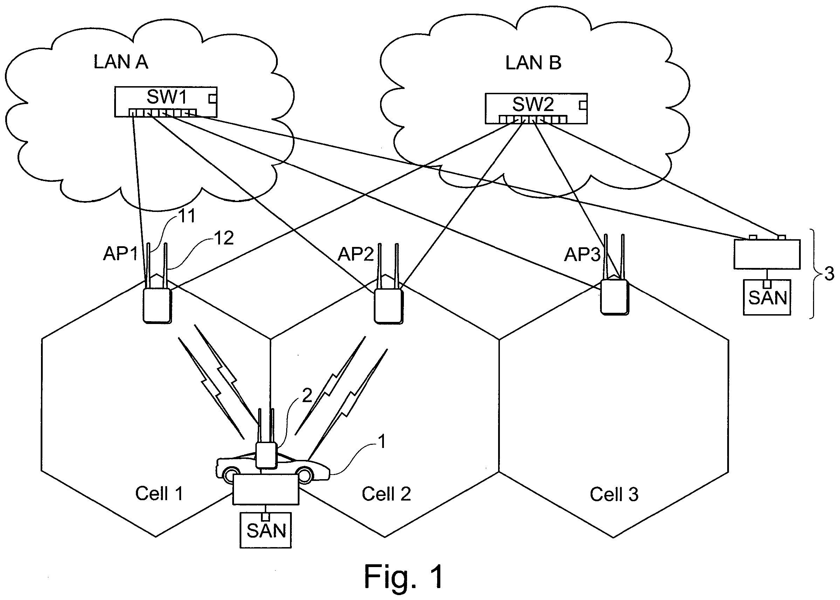

In Weiterbildung ist vorgesehen, dass die Steuerung der Unterbindung unnötiger Datenübertragungen, insbesondere der Verhinderung der Erzeugung und Übertragung von Datenduplikaten, durch eine zentrale Steuereinheit erfolgt. Das heißt, dass diese zentrale Steuereinheit sowohl die Einrichtungen innerhalb der einzelnen Funkzellen als auch innerhalb der einzelnen Netzwerke überwacht und auf diese Zugriff hat. Als Alternative dazu ist in Weiterbildung der Erfindung vorgesehen, dass die Steuerung durch jeweils eine in einer jeweiligen Übertragungsvorrichtung integrierte Steuereinheit durchgeführt wird. Dabei ist es denkbar, dass die jeweils in der jeweiligen Übertragungsvorrichtung innerhalb der Funkzelle beziehungsweise des Netzwerkes integrierten Steuereinheiten, die somit dezentral angeordnet sind, auch zentral von einer netzwerkübergreifenden Steuereinheit überwacht beziehungsweise kontrolliert werden.
Die Erfindung ist anhand von Ausführungsbeispielen, auf die die Erfindung jedoch nicht beschränkt ist, im Folgenden näher erläutert und wird in den Figuren gezeigt. Figur 1 zeigt, wie im Übrigen auch die weiteren Figuren, ein Gesamtnetzwerk, auf das sich die erfindungsgemäße Vorrichtung und das erfindungsgemäße Verfahren beziehen. In Figur 1 ist ein mobiler Teilnehmer 1 dargestellt, der stellvertretend durch ein Fahrzeug repräsentiert wird. Der mobile Teilnehmer 1 ist jedoch nicht auf ein Fahrzeug beschränkt, sondern kann jedes beliebige sich bewegende Objekt sein. In diesem mobilen Teilnehmer 1 ist eine Übertragungsvorrichtung enthalten, die dazu ausgebildet und geeignet ist, Signale über Antennen drahtlos, insbesondere über Funk zu übertragen. Der mobile Teilnehmer 1 befindet sich im Regelfall genau in einer Funkzelle Cell 1, wobei es ihm möglich ist, von der einen Funkzelle Cell 1 zu einer weiteren Funkzelle Cell 2 und zu weiteren Funkzellen Cell 3 bis Cell N (N > 3) zu wechseln. Damit hierbei die Datenübertragung sichergestellt ist, steht die Übertragungsvorrichtung 2 des mobilen Teilnehmers 1 immer in Funkverbindung mit der jeweiligen Übertragungsvorrichtung AP1, AP2, AP3 usw. der jeweils zugehörigen Funkzelle. Die Datenübertragung zwischen dem mobilen Teilnehmer 1 beziehungsweise dessen Übertragungsvorrichtung 2 und den zugehörigen Übertragungsvorrichtungen der jeweiligen Funkzellen erfolgen über die Übertragungsvorrichtungen AP1, AP2, AP3 usw. über redundante Funkstrecken. Damit es möglich wird, Daten sicher von dem mobilen Teilnehmer 1 zu einem stationären Empfänger 3 zu übertragen, werden die über die Übertragungsvorrichtungen AP1, AP2, AP3 usw. gesendeten bzw. empfangenen Daten über drahtgebundene Verbindungen an Netzwerke, vorzugsweise zwei Netzwerke LAN A und LAN B, weitergegeben. Über entsprechende Netzwerkinfrastrukturgeräte, hier ein Switch SW1 in dem einen Netzwerk LAN A und einem weiteren Switch SW2 im LAN B, werden die von dem mobilen Teilnehmer 1 abgegebenen Daten an die stationäre Empfangseinrichtung 3 übertragen beziehungsweise Daten von dem stationären Empfänger 3 zu dem mobilen Teilnehmer 1 hin übertragen. Dabei ist entsprechend dem Ausführungsbeispiel gemäß Figur 1 immer sichergestellt, dass zwischen dem mobilen Teilnehmer 1 und dem stationären Empfänger 3 eine redundante Datenverbindung, drahtlos und drahtgebunden, besteht. Das Gleiche gilt auch dafür, wenn der mobile Teilnehmer 1 von der einen Funkzelle in eine andere Funkzelle wechselt. Das bedeutet, dass dann, wenn sich der mobile Teilnehmer 1 in nur einer einzigen Zelle (zum Beispiel Cell 1) befindet, die Daten zwischen den Übertragungsvorrichtungen 2 und AP1 erfolgt. Befindet sich der mobile Teilnehmer 1 zum Beispiel nur in dem Wirkbereich der Funkzelle Cell 3, erfolgt die gesicherte Datenübertragung zwischen der Übertragungsvorrichtung 2 und der Übertragungsvorrichtung AP3 der Funkzelle Cell 3. In dem Ausführungsbeispiel gemäß Figur 1 ist dargestellt, dass sich der mobile Teilnehmer 1 gerade von der Funkzelle Cell 1 in die Funkzelle Cell 2 bewegt. Dabei ist folgendes Szenario denkbar. Die gesicherte Datenübertragung erfolgt von der Übertragungsvorrichtung 2 zu der Übertragungsvorrichtung AP1 oder umgekehrt redundant. Alternativ dazu erfolgt die gesicherte Datenübertragung zwischen der Übertragungsvorrichtung 2 und der Übertragungsvorrichtung AP2 der Funkzelle Cell 2. Alternativ oder ergänzend dazu kann auch die gesicherte Datenübertragung über eine der beiden redundanten Übertragungsstrecken zwischen der Übertragungsvorrichtung 2 und der Übertragungsvorrichtung AP1 der Funkzelle Cell 1 sowie über eine der beiden redundanten Übertragungsstrecken zwischen der Übertragungsvorrichtung 2 und der Übertragungsvorrichtung AP2 der Funkzelle Cell 2 erfolgen. Da die beiden Übertragungsvorrichtungen AP1 und AP2 redundant mit den beiden unabhängig voneinander wirkenden Netzwerken LAN A und LAN B drahtgebunden verbunden sind, erfolgt die gesamte Datenübertragung zwischen dem mobilen Teilnehmer 1 und dem stationären Empfänger 3 immer, insbesondere auch bei einem Handover, redundant.

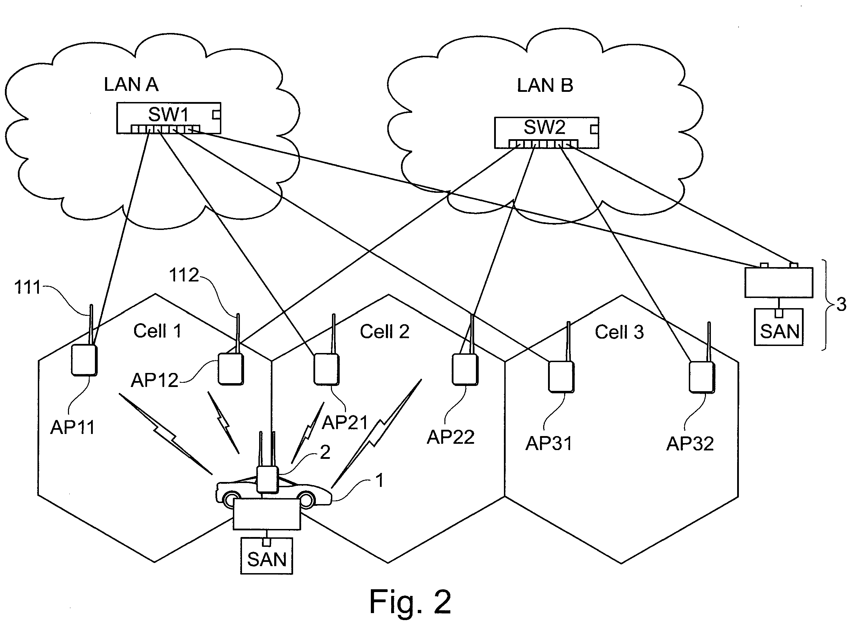

Während in Figur 1 dargestellt ist, dass je Funkzelle Cell 1, 2, 3 usw. die zugehörige Übertragungsvorrichtung AP1, AP2, AP3 usw. jeweils zwei Antennen (stellvertretend 11, 12 bei AP1) aufweist, ist es in Figur 2 gezeigt, dass je Funkzelle Cell 1 usw. zwei voneinander getrennte Übertragungsvorrichtungen AP11 / AP12, AP21 / AP22, AP31 / AP32 usw. mit jeweils einer Antenne (hier stellvertretend 111, 112 bei AP11) vorgesehen sind. Obwohl nicht dargestellt, gilt für die Ausführungsbeispiele in den Figuren das Gleiche für die Übertragungsvorrichtung 2 des mobilen Teilnehmers 1. Auch diese Übertragungsvorrichtung 2 kann ein einziges Gerät mit zwei Antennen (wie dargestellt) sein, wobei es alternativ vorgesehen sein kann, die Übertragungsvorrichtung 2 als zwei voneinander getrennte Geräte mit jeweils einer eigenen Antenne auszurüsten. Mit diesen beiden vorstehend beschriebenen Varianten wird in vorteilhafter Weise eine sehr gute redundante und sichere Datenübertragung erreicht. Auch der hierfür erforderliche Steuerungsaufwand durch entsprechende (nicht dargestellte) Steuereinheiten ist im Hinblick auf Schnelligkeit bei der Umschaltung zwischen zwei redundanten Übertragungsstrecken, Performance und auch Kosten als bestmöglich anzusehen. Darüber hinaus ist es jedoch nicht ausgeschlossen, auch mehr als zwei redundante Übertragungsstrecken (also drei, vier oder sogar noch mehr) und zugehörige Übertragungsvorrichtungen sowie in entsprechender Anzahl Funkstrecken und drahtgebundene Verbindungen vorzusehen.

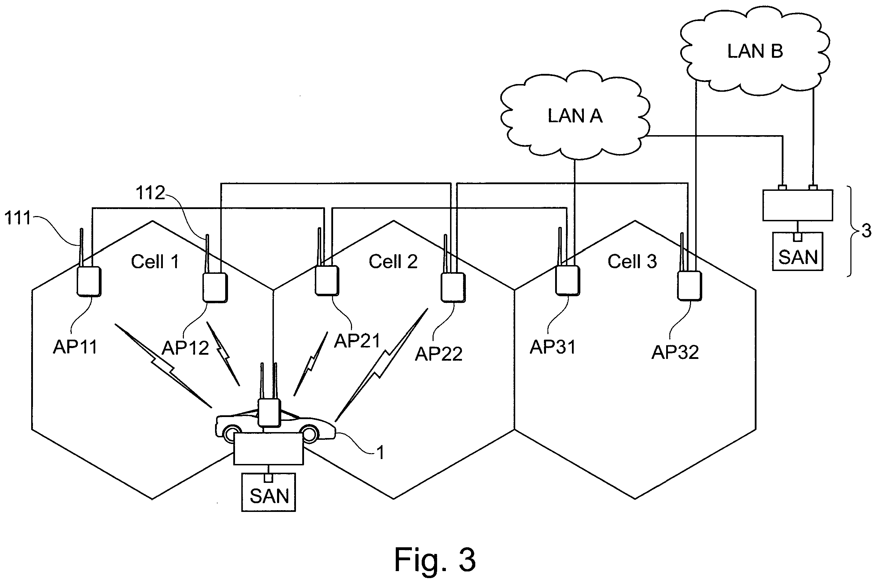

In Figur 3 ist die Variante gezeigt, dass jeweils eine Übertragungsvorrichtung jeweils einer Funkzelle drahtgebunden miteinander und eine der Übertragungsvorrichtungen mit dem zugehörigen Netzwerk verbunden sind. Als Beispiel sei hier die Übertragungskette AP11 / AP21 / AP31 / LAN A und als redundante Übertragungsstrecke AP12 / AP22 / AP 32 / LAN B genannt. An dieser Stelle sei erwähnt, dass die Darstellung von genau drei Funkzellen Cell 1 bis Cell 3 nur beispielhaft ist und in der Praxis die Anzahl der Funkzellen wesentlich größer sein wird.

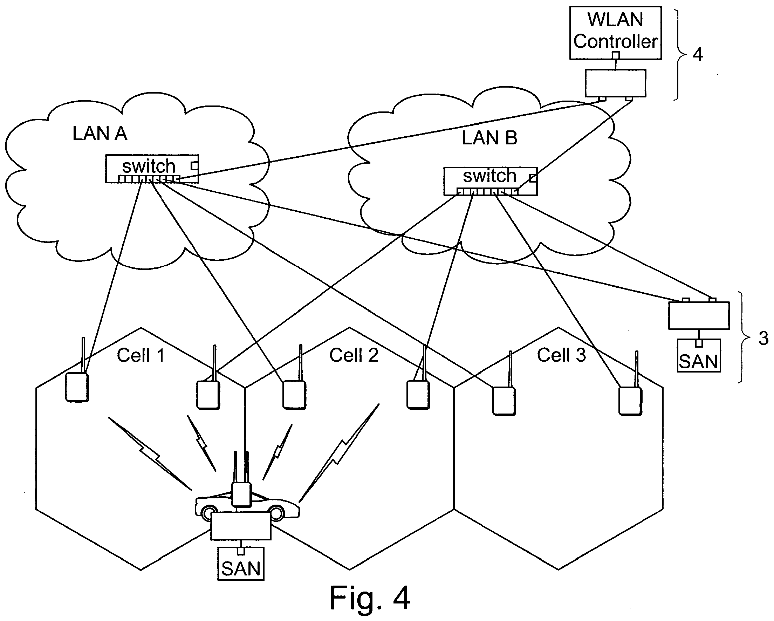

Figur 4 basiert auf dem Ausführungsbeispiel gemäß Figur 2, wobei es auch auf dem Ausführungsbeispiel gemäß Figur 1 basieren könnte. Hier ist dargestellt, dass die Steuerung der redundanten Datenübertragung sowie des Handovers durch eine zentrale Steuereinheit 4 erfolgt. Diese zentrale Steuereinheit 4 regelt beziehungsweise steuert die gesicherte Datenübertragung von dem mobilen Teilnehmer 1 zu dem stationären Empfänger 3 und / oder umgekehrt. Alternativ oder ergänzend dazu ist es denkbar, dass die Steuerung durch jeweils eine in einer jeweiligen Übertragungsvorrichtung integrierte Steuereinheit (hier nicht dargestellt) durchgeführt wird. Alternativ oder ergänzend dazu ist es denkbar, dass jeweils in einem Netzwerk (LAN A, LAN B und gegebenenfalls weitere Netzwerke) und auch in den jeweiligen Funkzellen (Cell 1, Cell 2, Cell 3 usw.) eigenständige Steuereinheiten für die redundante Datenübertragung und das Handover integriert sind. Bezüglich der hardwaremäßigen Realisierung ist es von besonderem Vorteil, wenn diese Steuerungsfunktionen für die redundante Datenübertragung beziehungsweise das Handover in den Übertragungsvorrichtungen (AP1, AP11 usw.) der jeweiligen Funkzellen integriert sind.
In den Ausführungsbeispielen gemäß Figuren 1 bis 4 weisen der mobile Teilnehmer 1 und / oder der stationäre Empfänger 3 und / oder die zentrale Steuereinheit 4 eine "Redbox" auf. Diese Redbox, auch als Redundancybox bezeichnet, ist ein Gerät zur Anschaltung von dem ebenfalls dargestellten SAN (Single Attached Node). Das bedeutet, dass der SAN ein normaler Netzwerkknoten ist, der nur einen Netzanschluss aufweist. Durch die Redbox wird es nun ermöglicht, sowohl hinsichtlich der Verschaltung als auch hinsichtlich der Steuerung einen solchen normalen Knoten mit nur einem Netzanschluss an ein Netzwerk (hier beispielsweise LAN A und LAN B) mit Redundanzeigenschaften anzuschließen. Das heißt, dass die Redbox die Datenübertragung, insbesondere hinsichtlich der redundanten Datenübertragung, zwischen dem normalen Knoten mit dem nur einen Netzanschluss und dem daran angeschlossenen redundanten beiden Netzwerken managed. Das Gleiche gilt selbstverständlich auch für die Redbox und den SAN den mobilen Teilnehmers 1. In den Ausführungsbeispielen gemäß Figur 1 bis 4 repräsentiert der SAN nur einen Knoten, wobei auch mehrere Knoten vorhanden sein können. An diesen Knoten sind weitere hier nicht dargestellte Netzwerkgeräte, wie zum Beispiel PCs, Verbindungen zu weiteren Netzwerken, Sensoren, Aktoren und dergleichen zu verstehen. Das heißt, dass zum Beispiel auch der mobile Teilnehmer 1 und / oder der stationäre Empfänger 3 nicht die "Endstation" bei der Datenübertragung ist / sind, sondern dass auch dort weitere Geräte, weitere Netzwerke oder dergleichen angeschlossen sein können.

In besonders vorteilhafter Weise erfolgt die drahtlose Übertragung über die jeweiligen redundanten Funkstrecken nach dem IEEE 802.11-Standard. Gemäß dem Stand der Technik war zuverlässiges stoßfreies Handover von mobilen Teilnehmern (mobile W-LAN-Clients) nach diesem Standard bisher nicht möglich, da eine W-LAN-Verbindung in der Praxis Störeinflüssen unterliegt, die zu sporadischen, das heißt nicht zu determinierenden Paketverlusten bei der Datenübertragung führen. Gerade bei der gesicherten Datenübertragung (sogenanntes Safety-Umfeld) ist das Standard-W-LAN nach 802.11 als Übertragungsmedium nicht oder nur eingeschränkt geeignet, da Anwendungen mit hoher Zykluszeit und unter sicherheitsrelevanten Aspekten (zum Beispiel keine Gefährdung von Menschen oder Einrichtungen) in der Praxis einen Paketverlust gleich oder nahe Null fordern.

Die Anwendung solcher gesicherter Datenübertragung ist zum Beispiel bei Arbeitsmaschinen, Arbeitsfahrzeugen (wie zum Beispiel Krane), aber auch bei verfahrens- oder produktionstechnischen Anlagen zu sehen, bei deren Steuerung es auf fehlerfreie Datenübertragung ankommt, da ansonsten bei einer nicht fehlerfreien Datenübertragung sicherheitsrelevante Aspekte in nachteiliger Weise eine Rolle spielen würden.

## Patentansprüche

1. Vorrichtung zur sicheren Datenübertragung zwischen einem mobilen Teilnehmer (1), der zumindest eine Übertragungsvorrichtung (2) aufweist, und einem stationären Empfänger (3), wobei der mobile Teilnehmer (1) zwischen mehreren Funkzellen (Cell 1, Cell 2, Cell 3) wechseln kann und jede Funkzelle (Cell 1, Cell 2, Cell 3) zumindest eine Übertragungsvorrichtung (AP1, AP2, AP3) aufweist, wobei weiterhin die zumindest eine Übertragungsvorrichtung (AP1 bis AP3) jeder Funkzelle drahtgebunden an zumindest einem Netzwerk (LAN A, LAN B) angeschlossen ist, wobei der stationäre Empfänger (3) ebenfalls drahtgebunden an dem zumindest einen Netzwerk (LAN A, LAN B) angeschlossen ist, und die Vorrichtung derart ausgestaltet ist, dass sowohl die drahtlose Übertragung zwischen dem mobilen Teilnehmer (1) und seiner jeweils zugehörigen Übertragungsvorrichtung (AP1 bis AP3) der Funkzelle als auch die drahtgebundene Datenübertragung zwischen der Übertragungsvorrichtung (AP1 bis AP3) der Funkzelle und dem zumindest einen zugehörigen Netzwerk (LAN A, LAN B) redundant erfolgt, sowie der stationäre Empfänger (3) redundant an das Netzwerk (LAN A, LAN B) drahtgebunden angeschlossen ist.

2. Vorrichtung nach Anspruch 1, **dadurch gekennzeichnet, dass** je Funkzelle (Cell 1 bis Cell 3) die zugehörige Übertragungsvorrichtung (AP1 bis AP3) jeweils zwei Antennen (11, 12) aufweist oder dass je Funkzelle (Cell 1 bis Cell 3) zwei voneinander getrennte Übertragungsvorrichtungen (AP11 / AP12, AP21 / AP22, AP31 / AP 32) mit jeweils einer Antenne (111, 112) vorgesehen sind.

3. Vorrichtung nach Anspruch 1 oder 2, **dadurch gekennzeichnet, dass** jeweils eine Übertragungsvorrichtung einer Funkzelle (Cell 1) mit jeweils einer Übertragungsvorrichtung einer weiteren Funkzelle (Cell 2, Cell 3 usw.) drahtgebunden miteinander und eine der Übertragungsvorrichtungen mit dem zugehörigen Netzwerk (LAN A, LAN B) drahtgebunden verbunden ist.

4. Vorrichtung nach einem der vorhergehenden Ansprüche, **dadurch gekennzeichnet, dass** an den Netzwerken (LAN A, LAN B) und / oder an der Übertragungsvorrichtung (2) des mobilen Teilnehmers (1) eine Redundancybox, Redbox, angeschlossen ist, wobei an der Redbox ausgangsseitig weitere Netzwerkgeräte, insbesondere zumindest ein Single Attached Node, SAN, angeschlossen ist.

5. Verfahren zur sicheren Datenübertragung zwischen einem mobilen Teilnehmer (1), der eine Übertragungsvorrichtung (2) aufweist, und einem stationären Empfänger (3), wobei der mobile Teilnehmer (1) zwischen mehreren Funkzellen (Cell 1, Cell 2, Cell 3) wechselt und jede Funkzelle (Cell 1, Cell 2, Cell 3) eine Übertragungsvorrichtung (AP1, AP2, AP3) aufweist, wobei weiterhin die Übertragungsvorrichtung (AP1 bis AP3) drahtgebunden an zumindest einem Netzwerk (LAN A, LAN B) angeschlossen ist, wobei der stationäre Empfänger (3) ebenfalls drahtgebunden an dem zumindest einen Netzwerk (LAN A, LAN B) angeschlossen ist und sowohl die drahtlose Übertragung zwischen dem mobilen Teilnehmer (1) und seiner jeweils zugehörigen Übertragungsvorrichtung (AP1 bis AP3) der Funkzelle als auch die drahtgebundene Datenübertragung zwischen der Übertragungsvorrichtung (AP1 bis AP3) der Funkzelle und dem zumindest einen zugehörigen Netzwerk (LAN A, LAN B) redundant erfolgt, sowie der stationäre Empfänger (3) redundant an das Netzwerk (LAN A, LAN B) drahtgebunden angeschlossen ist.

6. Verfahren nach Anspruch 5, **dadurch gekennzeichnet, dass** die drahtlose Übertragung über eine jeweils redundante Funkstrecke nach dem IEEE 802.11-Standard entweder mit gleichen oder unterschiedlichen Übertragungsparametern je Funkstrecke erfolgt.

7. Verfahren nach Anspruch 5 oder 6, **dadurch gekennzeichnet, dass** beim Übergang des mobilen Teilnehmers (1) in eine andere Funkzelle ein Handover-Vorgang der redundanten drahtlose Übertragungsstrecken koordiniert und nicht gleichzeitig erfolgt, so dass auch während eines Funkzellenwechsels auf einer Übertragungsstrecke immer noch eine Datenübertragung erfolgt, während sich eine andere drahtlose Übertragungsstrecke im Handover-Vorgang befindet.

8. Verfahren nach Anspruch 5, 6 oder 7, **dadurch gekennzeichnet, dass** die Datenübertragung immer über beide Übertragungsstrecken erfolgt, wobei dann, wenn festgestellt wird, dass auf einer Übertragungsstrecke die Datenübertragung fehlerfrei erfolgt ist, die gleiche oder erneute Datenübertragung auf der anderen Übertragungsstrecke unterbunden werden kann.

9. Verfahren nach Anspruch 8, **dadurch gekennzeichnet, dass** die Unterbindung innerhalb einer Funkzelle und / oder beim Wechseln des mobilen Teilnehmers (1) zwischen zwei Funkzellen erfolgt.

10. Verfahren nach Anspruch 8 oder 9, **dadurch gekennzeichnet, dass** eine Steuerung der Unterbindung durch eine zentrale Steuereinheit (4) erfolgt.

11. Verfahren nach Anspruch 10, **dadurch gekennzeichnet, dass** die Steuerung der Unterbindung durch jeweils eine in einer jeweiligen Übertragungsvorrichtung integrierte Steuereinheit oder durch eine netzwerkübergreifende und / oder funkzellenübergreifende Steuereinheit durchgeführt wird.

## Claims

1. Device for the secure transmission of data between a mobile participant (1) that has at least one transmission device (2) and a stationary receiver (3), wherein the mobile participant (1) is able to switch between a plurality of radio cells (Cell 1, Cell 2, Cell 3) and each radio cell (Cell 1, Cell 2, Cell 3) has at least one transmission device (AP1, AP2, AP3), wherein the at least one transmission device (AP1 to AP3) of each radio cell is furthermore connected in a wired manner to at least one network (LAN A, LAN B), wherein the stationary receiver (3) is likewise connected in a wired manner to the at least one network (LAN A, LAN B), and the device is designed such that both the wireless transmission between the mobile participant (1) and its respectively associated transmission device (AP1 to AP3) of the radio cell and the wired transmission of data between the transmission device (AP1 to AP3) of the radio cell and the at least one associated network (LAN A, LAN B) takes place redundantly, and the stationary receiver (3) is redundantly connected in a wired manner to the network (LAN A, LAN B).

2. Device according to Claim 1, **characterized in that,** per radio cell (Cell 1 to Cell 3), the associated transmission device (AP1 to AP3) in each case has two antennas (11, 12) or **in that**, per radio cell (Cell 1 to Cell 3), two separate transmission devices (AP11/AP12, AP21/AP22, AP31/AP32) each having one antenna (111, 112) are provided.

3. Device according to Claim 1 or 2, **characterized in that** in each case one transmission device of a radio cell (Cell 1) is connected in a wired manner to in each case one transmission device of a further radio cell (Cell 2, Cell 3, etc.) and one of the transmission devices is connected in a wired manner to the associated network (LAN A, LAN B).

4. Device according to one of the preceding claims, **characterized in that** a Redundancy Box, RedBox, is connected to the networks (LAN A, LAN B) and/or to the transmission device (2) of the mobile participant (1), wherein further network devices, in particular at least one Single Attached Node, SAN, are connected at the output of the RedBox.

5. Method for the secure transmission of data between a mobile participant (1) that has a transmission device (2) and a stationary receiver (3), wherein the mobile participant (1) switches between a plurality of radio cells (Cell 1, Cell 2, Cell 3) and each radio cell (Cell 1, Cell 2, Cell 3) has a transmission device (AP1, AP2, AP3), wherein the transmission device (AP1 to AP3) is furthermore connected in a wired manner to at least one network (LAN A, LAN B), wherein the stationary receiver (3) is likewise connected in a wired manner to the at least one network (LAN A, LAN B) and both the wireless transmission between the mobile participant (1) and its respectively associated transmission device (AP1 to AP3) of the radio cell and the wired transmission of data between the transmission device (AP1 to AP3) of the radio cell and the at least one associated network (LAN A, LAN B) takes place redundantly, and the stationary receiver (3) is redundantly connected in a wired manner to the network (LAN A, LAN B).

6. Method according to Claim 5, **characterized in that** the wireless transmission takes place via a respectively redundant radio path in accordance with the IEEE 802.11 standard, with either identical or different transmission parameters per radio path.

7. Method according to Claim 5 or 6, **characterized in that,** when the mobile participant (1) transfers to another radio cell, a handover procedure of the redundant wireless transmission paths takes place in a coordinated manner and not at the same time, such that, even during a change of radio cell, a transmission of data still takes place on one transmission path while another wireless transmission path is in the handover procedure.

8. Method according to Claim 5, 6 or 7, **characterized in that** the transmission of data always takes place over both transmission paths, wherein, when it is established that the transmission of data has taken place without any errors on one transmission path, the same or a repeated transmission of data on the other transmission path is able to be prevented.

9. Method according to Claim 8, **characterized in that** the prevention takes place within a radio cell and/or when the mobile participant (1) switches between two radio cells.

10. Method according to Claim 8 or 9, **characterized in that** the prevention is controlled by a central control unit (4).

11. Method according to Claim 10, **characterized in that** the prevention is controlled by a respective control unit integrated into a respective transmission device or by a control unit that is superordinate to the network and/or superordinate to the radio cells.

## Revendications

1. Dispositif pour la transmission fiable de données entre un abonné mobile (1), qui présente au moins un dispositif de transmission (2), et un récepteur fixe (3), dans lequel l'abonné mobile (1) peut alterner entre plusieurs cellules radio (Cell 1, Cell 2, Cell 3) et chaque cellule radio (Cell 1, Cell 2, Cell 3) présente au moins un dispositif de transmission (AP1, AP2, AP3), dans lequel ledit au moins un dispositif de transmission (AP1 à AP3) de chaque cellule radio est en outre raccordé par fil à au moins un réseau (LAN A, LAN B), dans lequel le récepteur fixe (3) est également raccordé par fil audit au moins un réseau (LAN A, LAN B), et le dispositif est conçu de telle sorte qu'aussi bien la transmission sans fil entre l'abonné mobile (1) et son dispositif de transmission associé respectif (AP1 à AP3) de la cellule radio que la transmission de données par fil entre le dispositif de transmission (AP1 à AP3) de la cellule radio et ledit au moins un réseau associé (LAN A, LAN B) s'effectue de manière redondante, et le récepteur fixe (3) est raccordé par fil au réseau (LAN A, LAN B) de manière redondante.

2. Dispositif selon la revendication 1, **caractérisé en ce que**, pour chaque cellule radio (Cell 1 à Cell 3), le dispositif de transmission associé (AP1 à AP3) présente respectivement deux antennes (11, 12) ou **en ce que**, pour chaque cellule radio (Cell 1 à Cell 3), il est prévu deux dispositifs de transmission (AP11 / AP12, AP21 / AP22, AP31 / AP32) séparés l'un de l'autre, chacun muni d'une antenne (111, 112).

3. Dispositif selon la revendication 1 ou 2, **caractérisé en ce qu'**un dispositif de transmission d'une cellule radio (Cell 1) et un dispositif de transmission d'une autre cellule radio (Cell 2, Cell 3 etc.) sont respectivement raccordés par fil l'un à l'autre, et l'un des dispositifs de transmission est raccordé par fil au réseau associé (LAN A, LAN B).

4. Dispositif selon l'une des revendications précédentes, **caractérisé en ce qu'**une Redundancybox, Redbox, est raccordée aux réseaux (LAN A, LAN B) et/ou au dispositif de transmission (2) de l'abonné mobile (1), dans lequel d'autres appareils de réseau, en particulier au moins un nœud Single Attached Node, SAN, sont raccordés côté sortie à la Redbox.

5. Procédé pour la transmission fiable de données entre un abonné mobile (1), qui présente un dispositif de transmission (2), et un récepteur fixe (3), dans lequel l'abonné mobile (1) alterne entre une pluralité de cellules radio (Cell 1, Cell 2, Cell 3) et chaque cellule radio (Cell 1, Cell 2, Cell 3) présente un dispositif de transmission (AP1, AP2, AP3), dans lequel le dispositif de transmission (AP1 à AP3) est en outre raccordé par fil à au moins un réseau (LAN A, LAN B), dans lequel le récepteur fixe (3) est également raccordé par fil audit au moins un réseau (LAN A, LAN B) et aussi bien la transmission sans fil entre l'abonné mobile (1) et son dispositif de transmission associé respectif (AP1 à AP3) de la cellule radio que la transmission de données par fil entre le dispositif de transmission (AP1 à AP3) de la cellule radio et ledit au moins un réseau associé (LAN A, LAN B) s'effectue de manière redondante, et le récepteur fixe (3) est raccordé par fil au réseau (LAN A, LAN B) de manière redondante.

6. Procédé selon la revendication 5, **caractérisé en ce que** la transmission sans fil s'effectue respectivement par l'intermédiaire d'une liaison radio redondante conformément à la norme IEEE 802.11 avec des paramètres de transmission identiques ou différents pour chaque liaison radio.

7. Procédé selon la revendication 5 ou 6, **caractérisé en ce que**, lors du passage de l'abonné mobile (1) dans une autre cellule radio, un processus de transfert des liaisons de transmission sans fil redondantes est coordonné et n'est pas effectué simultanément, de sorte que même lors d'un changement de cellule radio sur une liaison de transmission, une transmission de données s'effectue encore pendant qu'une autre liaison de transmission sans fil se trouve dans un processus de transfert.

8. Procédé selon la revendication 5, 6 ou 7, **caractérisé en ce que** la transmission de données s'effectue toujours par l'intermédiaire des deux liaisons de transmission, dans lequel, s'il est établi que la transmission de données sur une liaison de transmission s'est effectuée sans erreur, la même transmission de données ou une nouvelle transmission de données peut être inhibée sur l'autre liaison de transmission.

9. Procédé selon la revendication 8, **caractérisé en ce que** l'inhibition s'effectue à l'intérieur d'une cellule radio et/ou lors du basculement de l'abonné mobile (1) entre deux cellules radio.

10. Procédé selon la revendication 8 ou 9, **caractérisé en ce qu'**une commande de l'inhibition est effectuée par une unité de commande centrale (4).

11. Procédé selon la revendication 10, **caractérisé en ce que** la commande de l'inhibition est effectuée par une unité de commande intégrée dans un dispositif de transmission respectif ou par l'intermédiaire d'une unité de commande qui couvre le réseau et/ou qui couvre les cellules radio.
